# EUROPEAN PATENT SPECIFICATION

(11) **EP 2 447 483 B1**
(45) Date of publication and mention of the grant of the patent: **04.07.2018**
(21) Application number: 11186840.2
(22) Date of filing: 27.10.2011
(51) Int. Cl.: F01K 23/08, F01K 25/00, F01K 23/04

(54) **Rankine cycle integrated with absorption chiller**
Rankine-Prozess, der mit einer Absorptionskälteanlage integriert ist
Cycle de Rankine intégré avec dispositif frigorifique d'absorption

(30) Priority: 29.10.2010 US 916191
(43) Date of publication of application: 02.05.2012
(73) Proprietor: General Electric Company, Schenectady, NY 12345 (US)
(72) Inventor: Freund, Sebastian Walter, Niskayuna, NY New York 12309 (US)
(74) Representative: Illingworth-Law, William Illingworth

(56) References cited:
- EP-A2- 0 112 041
- DE-A1-102009 031 150
- US-A- 4 503 682
- US-A1- 2009 205 337
- US-A1- 2010 154 419
- US-A1- 2010 242 475
- US-A1- 2010 242 479

## Description

### BACKGROUND

The systems and techniques described include embodiments that relate to power generation using waste heat. More particularly the disclosure relates to power generation systems that employ a closed-loop, integrated carbon-dioxide (CO₂) Rankine cycle. They also include embodiments that relate to a closed-loop absorption chiller cycle integrated with the Rankine cycle. The invention also includes embodiments that relate to the use of waste heat to improve the efficiency of the power generation systems.

US 4 503 682 A discloses a low temperature engine system.

CO₂ as a supercritical working fluid for Rankine cycles is known to have advantages over organic fluids. The advantages include high stability, along with reduced or minimized flammability, and environmentally acceptable characteristics, e.g., generally non-toxic attributes. However, a CO₂ Rankine cycle for power generation may suffer performance penalties when the ambient temperature approaches the critical temperature of 30 degrees Celsius, especially during summertime. CO₂ is not used commonly because it cannot be readily condensed at the cold end of the cycle, like alternative fluids. This is due to the fact that the critical temperature of CO₂ is too high to allow condensation under warm ambient conditions, i.e., at a temperature of about 15 degrees Celsius to about 25 degrees Celsius. A cooling medium with a temperature significantly below 30 degrees Celsius may be needed to cool the condenser below 30 degrees Celsius. This attribute can be important because cooling below 30 degrees Celsius may facilitate condensation and subsequent pumping of CO₂ in a liquid state, to a high pressure.

At common ambient temperatures, (about 20 degrees Celsius to about 25 degrees Celsius), it may be nearly impossible to use air or water to cool the CO₂ to below 30 degrees Celsius. Alternately, a refrigeration system may be employed to cool the condenser and discharge the heat of condensation at a temperature above ambient temperature. Mechanical vapor compression refrigeration systems can be employed. These refrigeration systems would operate at relatively high efficiencies, at expected temperature conditions. However, a chiller, for example, a water chiller, may be needed to cool the condenser. The chiller may require power on the order of about 10 kilowatts to about 20 kilowatts per kilogram of CO₂, per second, to provide the necessary cooling and condensation. Given the high mass flow of CO₂ in the cycle per unit power generated, this parasitic load would amount to a severe performance penalty, potentially rendering the whole system too inefficient to be cost effective.

To commercialize a Rankine cycle system for waste heat recovery that benefits from the specific advantages of CO₂, a condenser cooling system is required for operation above 20 degrees Celsius ambient temperature. Unlike alternative systems, this system, in using an absorption cycle, would not significantly impact the performance. The system would enable the generation of more electricity during times of higher temperatures, which may coincide with peak demand, when electricity can be sold at a premium.

In view of these considerations, new processes for cooling and condensing the CO₂ would be welcome in the art. The new processes should also be capable of economic implementation, and should be compatible with other power generation systems.

### BRIEF DESCRIPTION

The present invention is defined in the accompanying claims.

One embodiment of the invention provides a power generation system. The system comprises a carbon-dioxide waste heat recovery Rankine cycle, integrated with an absorption chiller cycle. The Rankine cycle comprises a condenser and a desorber. The condenser of the Rankine cycle functions as an evaporator for the absorption chiller cycle. The Rankine cycle and the absorption chiller cycle can be integrated at the desorber.

Another embodiment of the invention relates to a power generation system. The system comprises a Rankine cycle-first working fluid circulation loop, comprising a heater, an expander, a recuperator, a first working fluid condenser, a desorber, a first working fluid pump, and a first working fluid comprising CO₂. The Rankine cycle is integrated with an absorption chiller cycle, comprising a second working fluid circulation loop. The absorption chiller cycle comprises an evaporator, an absorber, a second working fluid pump, a desorber, a second working fluid condenser, and a second working fluid, which comprises a refrigerant. The Rankine cycle and the absorption chiller cycle are integrated at the desorber. The condenser of the Rankine cycle can function as the evaporator of the absorption chiller cycle.

Yet another embodiment of the invention relates to a power generation system. The system comprises a first loop comprising a single expansion recuperated carbon-dioxide waste heat recovery Rankine cycle, integrated with a second loop comprising an absorption chiller cycle. The first loop comprises a recuperator configured to receive a liquid CO₂ stream and to produce a heated liquid CO₂ stream, a waste heat recovery boiler configured to receive the heated liquid CO₂ stream and to produce a vaporized CO₂ stream, and a first expander configured to receive the vaporized CO₂ stream and to produce an expanded CO₂ stream. The recuperator is also configured to receive the expanded CO₂ stream, and to produce a cooler CO₂ stream. The system also comprises a desorber configured to receive the cooler CO₂ stream, and to produce a CO₂ stream that is even cooler. A cooler is configured to receive the cooled CO₂ stream, and to produce a CO₂ stream that is even cooler, having a temperature in the range of about 35 degrees Celsius to about 55 degrees Celsius. An associated CO₂ condenser is configured to receive the cooled CO₂ stream, which is capable of being pumped back to the recuperator, using a CO₂ pump. The condenser is integrated with an evaporator of the absorption chiller cycle. The second loop comprises the evaporator of the absorption chiller cycle, configured to receive a substantially liquid refrigerant and to produce a vaporized refrigerant, an absorber configured to receive the vaporized refrigerant and to produce a first solution of the refrigerant and a solvent; wherein a second solution of the refrigerant and the solvent are contained in the absorber. The system also comprises a refrigerant pump configured to receive the first solution and to increase its pressure, wherein the desorber is also configured to receive the first solution at the higher pressure, and to produce a vaporized refrigerant and the second solution. The concentration of the refrigerant in the first solution is greater than the concentration of the refrigerant in the second solution. An associated refrigerant condenser is configured to receive the vaporized refrigerant and to produce a liquid refrigerant, and a pressure-reducing device is configured to receive the liquid refrigerant and reduce its pressure, for entry into the evaporator. The evaporator of the absorption chiller cycle is capable of directing the vaporized refrigerant back to the absorber.

An additional embodiment of the invention relates to another power generation system. The system comprises a first loop comprising a double expansion recuperated carbon-dioxide waste heat recovery Rankine cycle, integrated with a second loop comprising an absorption chiller cycle. The first loop comprises a waste heat recovery boiler configured to receive a first portion of a liquid CO₂ stream, and to produce a heated first portion of the CO₂ stream, a first expander configured to receive the heated first portion of the CO₂ stream and to produce an expanded first portion of the CO₂ stream, a recuperator configured to receive the expanded first portion of the CO₂ stream and to produce a cooler, first portion of the CO₂ stream, wherein the recuperator is also configured to receive a second portion of liquid CO₂ stream, and to produce a heat-enhanced (i.e., heated), second portion of the CO₂ stream, a second expander configured to receive the heat-enhanced second portion of the CO₂ stream, and to produce an expanded second portion of the CO₂ stream, a desorber configured to receive the expanded second portion of the CO₂ stream, and to produce a cooler second portion of the CO₂ stream, a cooler configured to receive the cooled first and second portion of the CO₂ stream, and to produce an even cooler CO₂ stream, having a temperature in the range of about 35 degrees Celsius to about 55 degrees Celsius, and a first working fluid condenser configured to receive the cooled CO₂ stream, integrated with an evaporator of an absorption chiller cycle. The evaporator is capable of producing the liquid CO₂ stream, which can be pumped back as the first portion and the second portion of the CO₂ stream, using a CO₂ pump. The second loop comprises the evaporator of the absorption chiller cycle, configured to receive a substantially liquid refrigerant, and to produce a vaporized refrigerant, an absorber configured to receive the vaporized refrigerant, and to produce a first solution of the refrigerant and a solvent; wherein a second solution of a refrigerant and a solvent is contained in the absorber, a second working fluid pump configured to receive the first solution of the refrigerant and the solvent, and to produce a first solution with increased pressure, wherein the desorber is also configured to receive the first solution with an increased pressure, and to produce a vaporized refrigerant, and the second solution, wherein the concentration of the refrigerant in the first solution is greater than the concentration of the refrigerant in the second solution, a refrigerant condenser configured to receive the vaporized refrigerant and to produce a liquid refrigerant, a pressure reducing device configured to receive the liquid refrigerant and reduce its pressure, for entry into the evaporator. The evaporator of the absorption chiller cycle is capable of directing the vaporized refrigerant back to the absorber.

Another embodiment of the invention relates to a power generation system that includes a carbon-dioxide, waste heat recovery Rankine cycle, integrated with an absorption chiller cycle. The system comprises a combined Rankine cycle condenser and chiller cycle evaporator.

### BRIEF DESCRIPTION OF THE FIGURES

These and other features, aspects, and advantages of the present invention will become better understood when the following detailed description is read, with reference to the accompanying drawings, wherein:
FIG. 1 is a process block flow diagram of the steps in an illustrative process for cooling and condensing CO₂;
FIG. 2 is a process block flow diagram of the steps in another illustrative process for cooling and condensing CO₂; and
FIG. 3 is a process block flow diagram of the steps in still another illustrative process for cooling and condensing CO₂.

### DETAILED DESCRIPTION

Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As used herein, the terms "may" and "may be" indicate a possibility of an occurrence within a set of circumstances; a possession of a specified property, characteristic or function. These terms may also qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances, an event or capacity can be expected, while in other circumstances the event or capacity cannot occur - this distinction is captured by the terms "may" and "may be".

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," and "the," are intended to mean that there are one or more of the elements. The terms "comprising," "including," and "having" are intended to be inclusive, and mean that there may be additional elements other than the listed elements. Furthermore, the terms "first," "second," and the like, herein do not denote any order, quantity, or importance, but rather are used to distinguish one element from another.

All ranges disclosed herein are inclusive of the endpoints, and the endpoints are combinable with each other. The terms "first," "second," and the like as used herein do not denote any order, quantity, or importance, but rather are used to distinguish one element from another. The use of the terms "a" and "an" and "the" and similar referents in the context of describing the invention (especially in the context of the following claims) are to be construed to cover both the singular and the plural, unless otherwise indicated herein or contradicted by context.

Embodiments of the invention described herein address the noted shortcomings of the state of the art. These embodiments advantageously provide an improved system of cooling and condensing CO₂. The system of cooling described herein fills the needs described above, by employing a Rankine cycle integrated with an absorption chiller cycle. The system comprises a combined Rankine cycle condenser and chiller cycle evaporator. This invention describes a system based on an absorption refrigeration technology that allows cooling and condensing CO₂, driven mainly by low-grade waste heat from a CO₂ Rankine Cycle after expansion. Employing the power generation system described herein enables minimizing or even removing the performance penalty associated with operating at high ambient temperatures. The CO₂ Rankine cycle may provide enough heat at the right temperature to seamlessly integrate a suitable absorption chiller.

One embodiment of the invention provides a power generation system. The system comprises a carbon-dioxide waste heat recovery Rankine cycle integrated with an absorption chiller cycle. The Rankine cycle comprises a condenser and a desorber. The condenser of the Rankine cycle functions as an evaporator of the absorption chiller cycle. The Rankine cycle and the absorption chiller cycle are integrated at the desorber. As used herein, the term "integrated" refers to certain elements of a power generation system that are combined or common to both the Rankine cycle and the absorption chiller cycle. As described herein both the loops use a common desorber. A single device or unit functions as the condenser of the Rankine cycle, and as the evaporator of the absorption chiller cycle. In other words, the second working fluid, comprising the refrigerant of the absorption chiller cycle, evaporates at the cost of condensing the first working fluid of the Rankine cycle, as part of the single device.

A condenser is a device or unit used to condense a substance from its gaseous state to its liquid state, typically by cooling it. The condenser of the Rankine cycle as described herein is employed to condense the first working fluid, for example, carbon-dioxide to liquid carbon-dioxide. In so doing, the resulting heat is given up by carbon-dioxide, and transferred to a refrigerant used in the condenser for cooling the carbon-dioxide. The refrigerant used in the condenser for cooling the carbon-dioxide is the working fluid of the absorption chiller cycle. The refrigerant absorbs the latent heat from the carbon-dioxide being cooled in the condenser, and the refrigerant is vaporized. Thus, as mentioned above, the condenser of the Rankine cycle also functions as the evaporator of the absorption chiller cycle.

As used herein, "Rankine cycle" is a cycle that converts heat into work. The heat is supplied externally to a closed loop, which usually uses water. This cycle generates most of the electric power used throughout the world. Typically, there are four processes in the Rankine cycle. In the first step, the working fluid is pumped from low pressure to high pressure. The fluid is a liquid at this stage, and the pump requires little input energy. In the second step, the high-pressure liquid enters a boiler where it is heated at constant pressure by an external heat source, so as to become a vapor. In the third step, the vapor expands through a turbine, generating power. This decreases the temperature and pressure of the vapor. In the fourth step, the vapor then enters a condenser, where it is condensed at a constant pressure, to become a saturated liquid. The process then starts again with the first step.

A recuperator is generally a counter-flow energy recovery heat exchanger that serves to recuperate, or reclaim heat from similar streams in a closed process in order to recycle it. Recuperators are used, for instance, in chemical and process industries, in various thermodynamic cycles including Rankine cycles with certain fluids, and in absorption refrigeration cycles. Suitable types of recuperators include shell and tube heat exchangers, and plate heat exchangers.

A desorber is used to remove the refrigerant from a solution, without thermally degrading the refrigerant. Suitable types of desorbers that may be employed include shell and tube heat exchangers and reboilers that may be coupled to a rectifier column.

A condenser is a heat transfer device or unit used to condense vapor into liquid. In one embodiment, the condenser employed includes shell and tube heat exchangers.

A cooler is a heat transfer device or unit used to decrease the temperature of a liquid or a vapor. In one embodiment, the cooler employed is an air-cooled heat exchanger with finned tubes.

One skilled in the art will appreciate that the recuperator, condenser, cooler, and desorber described herein may, individually or collectively include heat exchangers.

As used herein the phrase "substantially liquid refrigerant" usually refers to a two-phase mixture of liquid and vapor-phase refrigerant, with a relatively large mass fraction of liquid. For example, the mass fraction of the vapor component might be about 20 weight percent, based on the total mass.

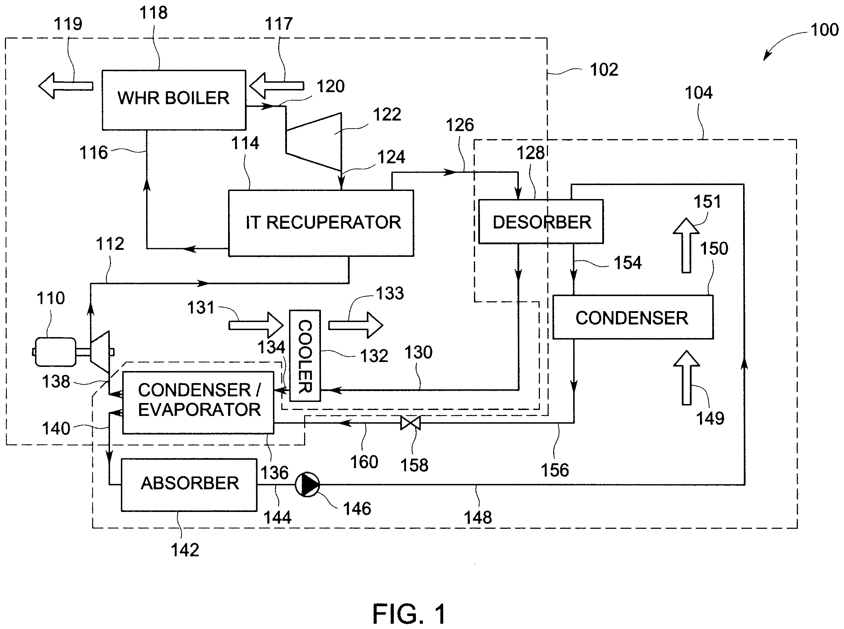

Referring to FIG. 1, a power generation system 100 is provided, based on some embodiments of the invention. The system 100 comprises a first cycle or "loop" 102. The first loop 102 is an example of a single expansion recuperated carbon-dioxide cycle for waste heat recovery. The first loop 102 is integrated with a second cycle or loop 104. The second loop 104 is an absorption chiller cycle. The first loop 102 can be viewed as beginning with a pump 110. A liquid CO₂ stream 112, usually having a temperature of about 10 degrees Celsius to about 30 degrees Celsius, is pumped through the pump 110 to an intermediate temperature recuperator 114, to produce a heat-enhanced liquid CO₂ stream 116, having a temperature in a range of about 100 degrees Celsius to about 200 degrees Celsius. As used herein the term "heat-enhanced" refers to a stream or liquid having a temperature greater than the temperature of the stream or liquid when it entered the particular system element or stage.

The heat-enhanced liquid CO₂ stream 116 is then passed through a waste heat recovery boiler 118, to produce a vaporized CO₂ stream 120 having a temperature in a range of about 350 degrees Celsius to about 500 degrees Celsius. In certain embodiments, the waste heat recovery boiler may be provided with an external source of heat, for example, heat originating in a gas turbine. In that instance, the heat source may enter the waste heat recovery boiler 118 at a higher temperature (designated by element 117), and may then exit the waste heat recovery boiler 118 at a lower temperature (designated by element 119). The vaporized CO₂ stream 120 is then passed through an expander 122. The temperature and pressure of the vaporized CO₂ stream is lowered in the expansion process to form a CO₂ stream 124, typically having a pressure in a range of about 60 bar to about 100 bar, and a temperature which is typically in a range of about 250 degrees Celsius to about 350 degrees Celsius.

The expander 122 may be connected to a generator via a shaft (not shown in figure). The cooler CO₂ stream 124 is then passed through the intermediate temperature recuperator 114. The CO₂ stream 124 is further cooled in the recuperator, to form a cooled CO₂ stream 126, usually having a temperature in a range of about 150 degrees Celsius to about 250 degrees Celsius. The liquid CO₂ stream 112 (pumped to the recuperator 114) absorbs the sensible heat from the CO₂ stream 124, as it passes through the recuperator 114. In doing so, the temperature of liquid CO₂ stream 112 increases to form the heat-enhanced CO₂ stream 116, i.e., a CO₂ stream having a higher temperature than the CO₂ stream 112.

The CO₂ stream 126 is then usually passed through a desorber 128, to form a cooler CO₂ stream 130, typically having a temperature in a range of about 70 degrees Celsius to about 120 degrees Celsius. The CO₂ stream 130 can then be passed through a cooler 132, to form an even cooler CO₂ stream 134. Stream 134 usually (but not always) has a temperature of about 35 degrees Celsius to about 55 degrees Celsius. In certain embodiments, the cooler 132 may be provided with an external cooling means, such as water or ambient air. The cooling source enters the cooler 132 at a lower temperature (designated by element 131) and exits the cooler 132 at a higher temperature (designated by element 133). The cooled CO₂ stream 134 can then be passed through a condenser 136, to form a liquid CO₂ stream 138, which can then be pumped (e.g., using the pump 110) back to the recuperator 114. In this manner, the first loop 102 of the CO₂ Rankine cycle is closed.

As mentioned above, an absorption chiller cycle 104 is integrated with the first loop 102. The condenser 136 of the first loop is cooled, using a substantially liquid refrigerant stream 160 (for example, water or ammonia). In doing so, the refrigerant stream 160 evaporates in the condenser 136, to form a vaporized refrigerant stream 140. Thus, in one embodiment, the condenser 136 of the first loop 102 functions as the evaporator 136 of the second loop 104. The vaporized refrigerant stream 140 can then be passed into an absorber 142.

A second solution of the refrigerant in a solvent (not shown in Figure 1) is typically contained in the absorber 142. (In certain embodiments, the absorber is brought to a lower temperature by conventional cooling means e.g., air or water. The temperature of the absorber is mantianed at a level sufficient to keep the second solution in a liquid state.) The vaporized refrigerant stream 140 is usually dissolved in the second solution, to form a first solution of the refrigerant in the solvent 144, having a relatively low pressure, e.g., about 0.1 bar to about 10 bar, depending on the selection of the particular refrigerant. The temperature of the first solution is usually in a range from about 20 degrees Celsius to about 25 degrees Celsius, and depends, for example, on the pressure of the first solution (the pressure can be adjusted so as to obtain a desired temperature for a selected solution). The heat absorbed by the vaporized refrigerant stream 140, when dissolving into the solvent in the absorber 142, may be rejected to the ambient atmosphere by means used to maintain the absorber at a lower temperature, as discussed above.

The first solution 144 is then usually passed thorough a refrigerant pump 146, to produce a first solution with an increased pressure 148. The pressure is in a range of about 11 bar to about 20 bar. The first solution 148 can then be passed to the desorber 128. Heat from the CO₂ stream 126 is transferred to the first solution 148, in the desorber. In doing so, the CO₂ stream 126 exits the desorber 128 as a relatively cooler CO₂ stream 130. In this process, the refrigerant in the first solution 148 is vaporized and mostly separated from the solvent, to form the second solution. The vaporized refrigerant 154 can then be passed from the desorber 128 to the refrigerant condenser 150. The second solution of the refrigerant in the solvent is usually retained in the desorber 128. (The second solution is formed when the refrigerant is vaporized from the first solution 148).

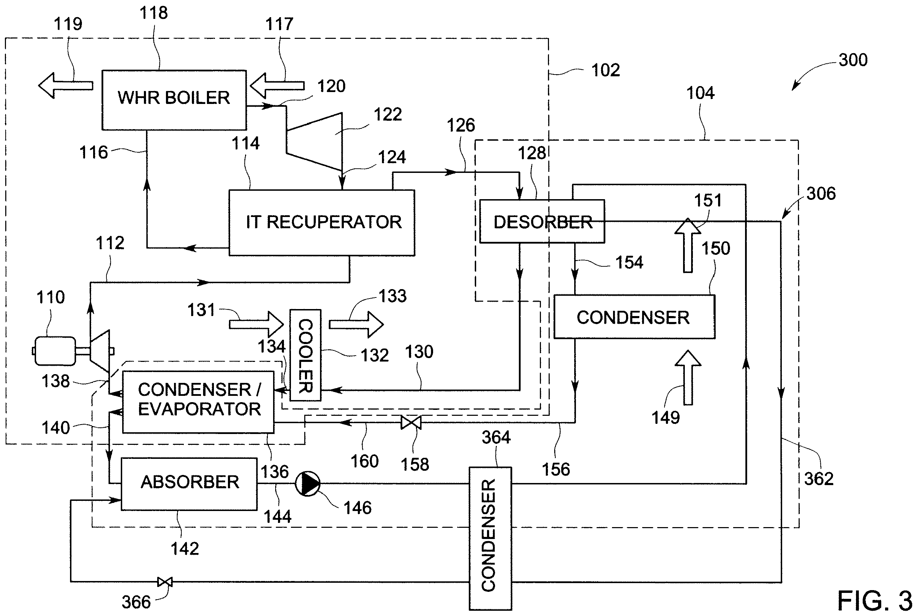

An additional loop (sometimes referred to as a "solution loop", shown in Figure 3 described below), can be used to convey the second solution from the desorber to the absorber. The additional loop may further comprise additional heat exchangers and valves to maintain the temperature and pressure of the second solution, as it is conveyed from the desorber to the absorber. The refrigerant condenser 150 provides a condensed liquid refrigerant 156. In certain embodiments, the refrigerant condenser 150 may be provided with an external cooling mechanism, for example, the use of water or ambient air. This type of coolant stream would enter the refrigerant condenser 150 at a lower temperature 149, and exit the refrigerant condenser 150 at a higher temperature 151. (Again, the figure elements represent the streams at different temperature levels.)

The liquid refrigerant stream 156 can then be passed through a pressure-reduction device 158, where its pressure is lowered, e.g., to a range of about 7 bar to about 9 bar. The pressure-reduction device 158 may constitute a variety of devices, e.g., a throttle valve or an expander. By passing through the pressure reduction device 158, stream 156 becomes a relatively cold refrigerant stream 160. The refrigerant stream 160 is then used to condense the CO₂ stream 134 entering the evaporator 136, to form the liquid CO₂ stream 138. In doing so, the refrigerant stream 160 is evaporated in the heat exchanger 136, to form the vaporized refrigerant stream 140. Stream 140 can then be passed again through the absorber 142, to form the first solution 144, thus closing the loop 104. The concentration of the refrigerant in the first solution is usually greater than the concentration of the refrigerant in the second solution.

In certain embodiments, additional heat exchangers may be provided to heat the CO₂ streams to the required temperature. One skilled in the art will appreciate that the heat exchangers may be provided at required positions in the second loop to maintain the heat balance of the loop. In one embodiment, an additional heat exchanger may be provided between the condenser/evaporator 136 and the absorber 142. The heat exchanger placed in this position may serve to adjust (e.g., increase) the temperature of the vaporized refrigerant 140.

In one embodiment, the system uses the heat of the working fluid, left over after expansion in the expander, to heat the desorber. However, in embodiments where the Rankine cycle configuration does not provide sufficient heat, or where the temperature level is below the required temperature level, additional heat sources may also be employed. Suitable, additional heat sources include, for example, the remaining waste heat generated from the CO₂ boiler; or the heat provided by an auxiliary, fired boiler.

In certain embodiments, the high-pressure refrigerant vapor and solution mixture 154 exiting the desorber may be passed through a rectifier in which most of the remaining refrigerant is separated from the solution. The refrigerant vapor exiting the rectifier can then be passed through the refrigerant condenser 150.

The refrigerant is usually water or ammonia. Unless otherwise indicated, the pressure values (e.g., about 7 bar to about 9 bar) are provided for the case of ammonia. (It should be understood that the pressure values may be lower for other types of refrigerants, such as water). The solvent is either water for the ammonia, or a lithium bromide-water solution.

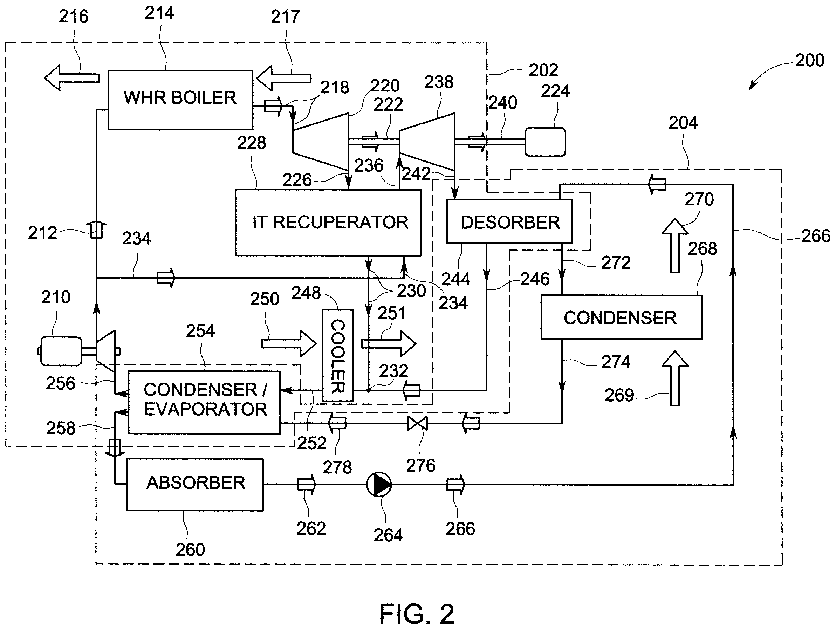

Referring to FIG. 2, a power generation system 200 is provided, based on some embodiments of the invention. The system 200 comprises a first loop 202. The first loop 202 is an example of a double expansion recuperated carbon-dioxide cycle for waste heat recovery. The first loop 202 is integrated with a second loop 204. The second loop 204 is an absorption chiller cycle. The first loop 202 usually begins with a pump 210. A liquid CO₂ stream 212, having a temperature of about 10 degrees Celsius to about 30 degrees Celsius, can be pumped through the pump 210 to a waste heat recovery boiler 214. In certain embodiments, the waste heat recovery boiler 214 may be provided with an external source of heat, for example, heat originating in a gas turbine. The heat source enters the waste heat recovery boiler 214 at a higher temperature 217, and exits the waste heat recovery boiler 214 at a lower temperature 216 (as designated by reference numerals).

The CO₂ stream 212 is heated to provide a vaporized CO₂ stream 218, usually having a temperature in a range of about 350 degrees Celsius to about 500 degrees Celsius. The vaporized CO₂ stream 218 is then passed through a first expander 220, to form a cooler CO₂ stream 226. The temperature and pressure of the vaporized CO₂ stream 218 are often lowered in the expansion process, to a pressure in a range of about 60 bar to about 100 bar, and a temperature in a range of about 250 degrees Celsius to about 350 degrees Celsius, to produce the cooler CO₂ stream 226. The first expander 220 may be connected to a generator 224, via a shaft 222. The cooler CO₂ stream 226 can then be passed through an intermediate temperature recuperator 228. The CO₂ stream 226 is further cooled, on passing through the recuperator 228, to form an even cooler CO₂ stream 230, usually having a temperature in a range of about 50 degrees Celsius to about 100 degrees Celsius. The cooled CO₂ stream 230 can then be passed through a mixing junction 232.

In parallel with the passage of the first portion of the liquid CO₂ stream 212 (and sometimes, simultaneously therewith) a second portion of the liquid CO₂ stream 234 is pumped through the pump 210, to the recuperator 228. Heat from the CO₂ stream 226 passing through the recuperator is transferred to the second portion of the liquid CO₂ stream 234, to produce a heat vaporized CO₂ stream 236, having a temperature which is usually in the range of about 240 degrees Celsius to about 340 degrees Celsius. The vaporized CO₂ stream 236 can then be passed through a second expander 238. The expander 238 is usually connected to the generator 224 through a portion of a shaft 240. A cooler CO₂ stream 242, (i.e., cooler than the vaporized CO₂ stream 236), usually having a temperature in a range of about 150 degrees Celsius to about 200 degrees Celsius, exits from the second expander 238, and is then passed through the desorber 244, to form a relatively cool CO₂ stream 246. The CO₂ stream 246 may have a temperature in a range of about 70 degrees Celsius to about 120 degrees Celsius. The CO₂ stream 246 can then be passed through the mixing junction 232. The two CO₂ streams 230 and 246 can be mixed at the junction 232, and then passed through a cooler 248. In certain embodiments, the cooler 248 may be provided with an external cooling mechanism, as described for other embodiments. As an example, the cooling source can enter the cooler 248 at a lower temperature 250, and exit the cooler 248 at a higher temperature 251. The cooled CO₂ stream 252, usually having a temperature in a range of about 30 degrees Celsius to about 55 degrees Celsius, can then be passed through a condenser 254, to form a liquid CO₂ stream 256, which usually has a temperature in a range of about 20 degrees Celsius to about 30 degrees Celsius, thus closing the first loop 202.

An absorption chiller system 204 is integrated with the first loop 202. The condenser 254 of the first loop is usually cooled, using a substantially liquid refrigerant stream 278 (for example, water or ammonia). In doing so, the refrigerant stream 278 usually evaporates in the condenser 254, to form a vaporized refrigerant stream 258. Thus, in one embodiment, the condenser 254 of the first loop 202, functions as the evaporator 254 of the second loop 204.

The vaporized refrigerant stream 258 can be passed into an absorber 260. A second solution of the refrigerant in a solvent (not shown in figure) is usually present in the absorber 260. The vaporized refrigerant stream 258 can be dissolved in the second solution to form a first solution of the refrigerant in a solvent 262, having a pressure in a range of about 7 bar to about 9 bar, and temperature in a range of about 20 degrees Celsius to about 25 degrees Celsius. (As described for previous embodiments, the temperature and pressure can vary for a given situation and a given refrigerant, and are usually interdependent on each other). The heat absorbed from the vaporized refrigerant stream 258 by the absorber 260 may be rejected to the ambient atmosphere, as discussed above in the description for Fig. 1.

The first solution 262 can then be passed thorough a refrigerant pump 264, to increase its pressure. The higher-pressure, first solution 266 can then be passed through the desorber 244. Heat from the CO₂ stream 242 is transferred to the first solution 266 in the desorber 244. In doing so, the CO₂ stream 242 can then be transformed into the cooler CO₂ stream 246 that exits the desorber 244. In the process, the refrigerant in the first solution 266 is vaporized, and the vaporized refrigerant 272 passes from the desorber 244 to the refrigerant condenser 268. The second solution of the refrigerant in the solvent (not shown in figure) is retained in the desorber 244. (The second solution is usually formed when the refrigerant is vaporized from the first solution 266). An additional loop, discussed in Fig. 3 below, can be used to convey the second solution from the desorber to the absorber. The additional loop may further comprise additional heat exchangers and valves to maintain the temperature and pressure of the second refrigerant solution, as it is conveyed from the desorber to the absorber. The refrigerant condenser 268 provides a condensed liquid refrigerant 274. In certain embodiments, the refrigerant condenser 268 may be provided with an external cooling mechanism, as described previously. Thus the cooling source would typically enter the refrigerant condenser 268 at a lower temperature 269, and exit the refrigerant condenser 267 at a higher temperature 270.

The liquid refrigerant stream 274 can then be passed through a pressure reducing device 276 where its pressure is lowered, usually, to a range of about 7 bar to about 9 bar, at a temperature in the range of about 15 degrees Celsius to about 20 degrees Celsius. By passing through the pressure reducing device 276, the stream is formed into a relatively cool, two-phase mixture of liquid and vapor refrigerant stream 278. The refrigerant stream 278 can then be used to condense the CO₂ stream 252 entering the condenser 254, to form the liquid CO₂ stream 256. In doing so, the refrigerant stream 278 is evaporated in the evaporator 254, to form the vaporized refrigerant stream 258. The evaporator 254 is capable of directing the vaporized refrigerant back to the absorber 260. As mentioned above, the concentration of the refrigerant in the first refrigerant solution is usually greater than the concentration of the refrigerant in the second refrigerant solution, based on the amount of solvent which is present.

Referring to FIG. 3, a power generation system 300 is provided, according to some embodiments. The system 300 comprises a first loop 102 and a second loop 104, as generally described above with reference to FIG. 1 (where appropriate, the same reference numerals have been used). The system 300 may further comprise an additional loop 306. The additional loop 306, as described previously, conveys the second solution 362 from the desorber 128 to the absorber 142. The additional loop 306 may further comprise additional heat exchangers 364 and pressure reducing devices 366, to maintain the temperature and pressure of the second solution 362, as it is conveyed from the desorber 128 to the absorber 142.

In one embodiment, the present invention provides a net power benefit to a CO₂ Rankine Cycle of about 10 percent, as compared to a cycle without an integrated absorption chiller, under similar or identical environmental conditions. For higher ambient temperatures, this benefit may increase, while the benefit may be lower at cold ambient temperatures where condensation could be possible without an absorption chiller. This condensing system may provide considerable benefits to new CO₂ Rankine cycles for waste heat recovery, and can enable operation at ambient temperatures above approximately 20 degrees Celsius, with high efficiency.

While the invention has been described in detail in connection with a number of embodiments, the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A power generation system (100), comprising:
a Rankine cycle-first working fluid circulation loop (102), comprising a heater (118), an expander (122), a recuperator (114), a first working fluid condenser (136), a desorber (128), a first working fluid pump (110), and a first working fluid comprising CO₂; integrated with
an absorption chiller cycle comprising a second working fluid circulation loop (104), which itself comprises an evaporator (136), an absorber (142), a second working fluid pump (146), a desorber (128), a second working fluid condenser (150), and a second working fluid comprising a refrigerant;
wherein the condenser (136) of the Rankine cycle functions as the evaporator (136) of the absorption chiller cycle; and
**characterized in that** the Rankine cycle and the absorption chiller cycle are integrated at the desorber (128) in which the first working fluid of the Rankine cycle is circulated in heat exchange relationship with the second working fluid of the absorption chiller cycle.

2. The system of claim 1, wherein the Rankine cycle-first working fluid circulation loop (102) further comprises a cooler (132).

3. The system of claim 1 or claim 2, wherein the absorption chiller cycle further comprises at least one heat exchanger.

4. The system of any preceding claim, wherein the absorption chiller cycle further comprises an additional fluid loop to transport a solution of the refrigerant in a solvent between the desorber (128) and the absorber (142).

5. The power generation system of claim 1 wherein:
the first loop (102) comprises a single expansion recuperated carbon-dioxide waste heat recovery Rankine cycle, including:
a recuperator (114) configured to receive a liquid CO₂ stream, and to produce a heat-enhanced liquid CO₂ stream;
a waste heat recovery boiler (118) configured to receive the heat-enhanced liquid CO₂ stream, and to produce a vaporized CO₂ stream;
a first expander (122) configured to receive the vaporized CO₂ stream and to produce an expanded CO₂ stream;
wherein the recuperator (114) is also configured to receive the expanded CO₂ stream and to produce a cooler CO₂ stream;
a desorber (128) configured to receive the cooler CO₂ stream, and to further reduce its temperature;
a cooler (132) configured to receive the cooled CO₂ stream, and to produce an even cooler CO₂ stream, having a temperature in the range of about 35 degrees Celsius to about 55 degrees Celsius; and
a CO₂ condenser (136) configured to receive the cooled CO₂ stream, and to produce a liquid CO₂ stream which is capable of being pumped back to the recuperator (114), using a CO₂ pump (110), wherein the condenser (136) is integrated with an evaporator of an absorption chiller cycle; and
wherein the second loop (104) comprises:
the evaporator (136) of the absorption chiller cycle configured to receive a substantially liquid refrigerant and to produce a vaporized refrigerant;
an absorber (142) configured to receive the vaporized refrigerant and to produce a first solution of the refrigerant and a solvent, wherein a second solution of the refrigerant and the solvent is contained in the absorber;
a refrigerant pump (146) configured to receive the first solution and to increase its pressure;
wherein the desorber (128) is also configured to receive the first solution, having an increased pressure, and to produce a vaporized refrigerant and the second solution; wherein the concentration of the refrigerant in the first solution is greater than the concentration of the refrigerant in the second solution;
a refrigerant condenser (150) configured to receive the vaporized refrigerant and to produce a liquid refrigerant; and
a pressure-reducing device (158) configured to receive the liquid refrigerant and lower its pressure, so that it can be received by the evaporator (136); and
wherein the evaporator (136) of the absorption chiller cycle is capable of directing the vaporized refrigerant back to the absorber (142).

6. The system of claim 5, wherein the absorption chiller cycle further comprises a heat exchanger configured to receive the vaporized refrigerant from the evaporator and provide a heat-enhanced vaporized refrigerant to the absorber (142).

7. The power generation system of claim 1 wherein:
the first loop (202) comprises a double expansion recuperated carbon-dioxide waste heat recovery Rankine cycle including:
a waste heat recovery boiler (214) configured to receive a first portion of a liquid CO₂ stream and to produce a heated first portion of the CO₂ stream;
a first expander (220) configured to receive the heated first portion of the CO₂ stream and to produce an expanded first portion of the CO₂ stream;
a recuperator (228) configured to receive the expanded first portion of the CO₂ stream and to produce a cooler first portion of the CO₂ stream; wherein the recuperator is also configured to receive a second portion of liquid CO₂ stream, and to produce a heat-enhanced second portion of the CO₂ stream;
a second expander (238) configured to receive the heat-enhanced second portion of the CO₂ stream and to produce an expanded second portion of the CO₂ stream;
a desorber (244) configured to receive the expanded second portion of the CO₂ stream and to produce a cooler second portion of the CO₂ stream;
a cooler (248) configured to receive the cooled first portion of the CO₂ stream and the cooled second portion of the CO₂ stream, and to produce an even cooler CO₂ stream having a temperature in the range of about 35 degrees Celsius to about 55 degrees Celsius;
a first working fluid condenser (254), configured to receive the cooled CO₂ stream, integrated with an evaporator of an absorption chiller cycle; and capable of producing a liquid CO₂ stream; which can be pumped back as the first portion and the second portion of the liquid CO₂ stream, using a CO₂ pump; and
wherein the second loop comprises:
the evaporator (254) of the absorption chiller cycle configured to receive a substantially liquid refrigerant, and to produce a vaporized refrigerant;
an absorber (260) configured to receive the vaporized refrigerant, and to produce a first solution of the refrigerant and a solvent; wherein a second solution of a refrigerant and a solvent is contained in the absorber;
a second working fluid pump (264) configured to receive the first solution and to increase its pressure;
wherein the desorber (244) is also configured to receive the first solution with an increased pressure, and to produce a vaporized refrigerant and the second solution; wherein the concentration of the refrigerant in the first solution is greater than the concentration of the refrigerant in the second solution;
a refrigerant condenser (268) configured to receive the vaporized refrigerant and to produce a liquid refrigerant;
a pressure reducing device (276) configured to receive the liquid refrigerant and lower its pressure, so that it can be received by the evaporator; and
wherein the evaporator (254) of the absorption chiller cycle is capable of directing the vaporized refrigerant back to the absorber.

8. The system of claim 7, wherein a conduit or container captures the heat of the CO₂ left over after expansion, and is capable of directing the heat to the desorber (244).

## Patentansprüche

1. Stromerzeugungssystem (100), umfassend:
eine erste Rankine-Prozess-Arbeitsfluid-Zirkulationsschleife (102), umfassend eine Heizvorrichtung (118), einen Expander (122), einen Rekuperator (114), einen ersten Arbeitsfluidkondensator (136), einen Desorber (128), eine erste Arbeitsfluidpumpe (110) und ein erstes Arbeitsfluid, das CO₂ umfasst; das integriert ist mit
einem Absorptionskälteanlagenzyklus, der eine zweite Arbeitsfluid-Zirkulationsschleife (104) umfasst, die selbst einen Verdampfer (136), einen Absorber (142), eine zweite Arbeitsfluidpumpe (146), einen Desorber (128), einen zweiten Arbeitsfluidkondensator (150) und ein zweites Arbeitsfluid umfasst, das ein Kältemittel umfasst;
wobei der Kondensator (136) des Rankine-Prozesses als der Verdampfer (136) des Absorptionskälteanlagenzyklus dient; und
**dadurch gekennzeichnet, dass** der Rankine-Prozess und der Absorptionskälteanlagenzyklus in dem Desorber (128) integriert sind, in dem das erste Arbeitsfluid des Rankine-Prozesses in Wärmeaustauschbeziehung mit dem zweiten Arbeitsfluid des Absorptionskälteanlagenzyklus zirkuliert.

2. System nach Anspruch 1, wobei die erste Rankine-Prozess-Arbeitsfluid-Zirkulationsschleife (102) weiter einen Kühler (132) umfasst.

3. System nach Anspruch 1 oder Anspruch 2, wobei der Absorptionkälteanlagenzyklus weiter mindestens einen Wärmetauscher umfasst.

4. System nach einem der vorstehenden Ansprüche, wobei der Absorptionskälteanlagenzyklus weiter eine zusätzliche Fluidschleife umfasst, um eine Lösung des Kältemittels in einem Lösungsmittel zwischen dem Desorber (128) und dem Absorber (142) zu transportieren.

5. Stromerzeugungssystem nach Anspruch 1, wobei:
die erste Schleife (102) einen einzelnen expansionsrückgewonnenen Kohlendioxid-Abwärmerückgewinnungs-Rankine-Prozess umfasst, der aufweist:
einen Rekuperator (114), der zum Aufnehmen eines flüssigen CO₂-Stroms und zum Erzeugen eines wärmeverstärkten flüssigen CO₂-Stroms konfiguriert ist;
einen Abwärme-Rückgewinnungskessel (118), der zum Aufnehmen eines wärmeverstärkten flüssigen CO₂-Stroms und zum Erzeugen eines verdampften CO₂-Stroms konfiguriert ist;
einen ersten Expander (122), der zum Aufnehmen des verdampften CO₂-Stroms und zum Erzeugen eines expandierten CO₂-Stroms konfiguriert ist;
wobei der Rekuperator (114) auch zum Aufnehmen des expandierten CO₂-Stroms und zum Erzeugen eines kühleren CO₂-Stroms konfiguriert ist;
einen Desorber (128), der zum Aufnehmen des kühleren CO₂-Stroms und zum weiteren Reduzieren der Temperatur desselben konfiguriert ist;
einen Kühler (132), der zum Aufnehmen des gekühlten CO₂-Stroms und zum Erzeugen eines gleichförmigeren kühleren CO₂-Stroms konfiguriert ist, der eine Temperatur im Bereich von etwa 35 Grad Celsius bis etwa 55 Grad Celsius aufweist; und
einen CO₂-Kondensator (136), der zum Aufnehmen des gekühlten CO₂-Stroms und zum Erzeugen eines flüssigen CO₂-Stroms konfiguriert ist, der unter Verwendung einer CO₂-Pumpe (110) zurück in den Rekuperator (114) gepumpt werden kann, wobei der Kondensator (136) mit einem Verdampfer eines Absorptionskälteanlagenzyklus integriert ist; und
wobei die zweite Schleife (104) umfasst:
den Verdampfer (136) des Absorptionskälteanlagenzyklus, der zum Aufnehmen eines im Wesentlichen flüssigen Kältemittels und zum Erzeugen eines verdampften Kältemittels konfiguriert ist;
einen Absorber (142), der zum Empfangen des verdampften Kältemittels und zum Erzeugen einer ersten Lösung des Kältemittels und eines Lösungsmittels konfiguriert ist, wobei eine zweite Lösung des Kältemittels und das Lösungsmittel im Absorber enthalten sind;
eine Kältemittelpumpe (146), die zum Empfangen der ersten Lösung und zum Erhöhen des Drucks konfiguriert ist;
wobei der Desorber (128) auch zum Aufnehmen der ersten Lösung, die einen erhöhten Druck aufweist, und zum Erzeugen eines verdampften Kältemittels und der zweiten Lösung konfiguriert ist; wobei die Konzentration des Kältemittels in der ersten Lösung größer als die Konzentration des Kältemittels in der zweiten Lösung ist;
einen Kältemittelkondensator (150), der zum Aufnehmen des verdampften Kältemittels und zum Erzeugen eines flüssigen Kältemittels konfiguriert ist; und
eine Druckreduziervorrichtung (158), die zum Aufnehmen des flüssigen Kältemittels und Reduzieren des Drucks davon konfiguriert ist, so dass es vom Verdampfer (136) aufgenommen werden kann; und
wobei der Verdampfer (136) des Absorptionskälteanlagenzyklus das verdampfte Kältemittel zurück zum Absorber (142) leiten kann.

6. System nach Anspruch 5, wobei der Absorptionskältemittelzyklus weiter einen Wärmetauscher umfasst, der konfiguriert ist, um das verdampfte Kältemittel von dem Verdampfer aufzunehmen und ein wärmeverstärktes verdampftes Kältemittel dem Absorber (142) bereitzustellen.

7. Stromerzeugungssystem nach Anspruch 1, wobei:
die erste Schleife (202) einen doppelten expansionsrückgewonnenen Kohlendioxid-Abwärmerückgewinnungs-Rankine-Prozess umfasst, der aufweist:
einen Abwärme-Rückgewinnungskessel (214), der zum Aufnehmen eines ersten Teils eines flüssigen CO₂-Stroms und zum Erzeugen eines erwärmten ersten Teils des CO₂-Stroms konfiguriert ist;
einen ersten Expander (220), der zum Aufnehmen des erwärmten ersten Teils des CO₂-Stroms und zum Erzeugen eines expandierten ersten Teils des CO₂-Stroms konfiguriert ist;
einen Rekuperator (228), der zum Aufnehmen des expandierten ersten Teils des CO₂-Stroms und zum Erzeugen eines kühleren ersten Teils des CO₂-Stroms konfiguriert ist; wobei der Rekuperator auch zum Aufnehmen eines zweiten Teils eines flüssigen CO₂-Stroms und zum Erzeugen eines wärmeverstärkten zweiten Teils des CO₂-Stroms konfiguriert ist;
einen zweiten Expander (238), der zum Aufnehmen des wärmeverstärkten zweiten Teils des CO₂-Stroms und zum Erzeugen eines expandierten zweiten Teils des CO₂-Stroms konfiguriert ist;
einen Desorber (244), der zum Aufnehmen des expandierten zweiten Teils des CO₂-Stroms und zum Erzeugen eines kühleren zweiten Teils des CO₂-Stroms konfiguriert ist;
einen Kühler (248), der zum Aufnehmen des gekühlten ersten Teils des CO₂-Stroms und des gekühlten zweiten Teils des CO₂-Stroms und zum Erzeugen eines gleichförmigen kühleren CO₂-Stroms konfiguriert ist, der eine Temperatur im Bereich von etwa 35 Grad Celsius bis etwa 55 Grad Celsius aufweist;
einen ersten Arbeitsfluidkondensator (254), der zum Aufnehmen des gekühlten CO₂-Stroms konfiguriert ist, der mit einem Verdampfer eines Absorptionkältemaschinenzyklus integriert ist; und der einen flüssigen CO₂-Strom erzeugen kann; der als der erste Teil und der zweite Teil des flüssigen CO₂-Stroms unter Verwendung einer CO₂-Pumpe zurückgepumpt werden kann; und
wobei die zweite Schleife umfasst:
den Verdampfer (254) des Absorptionskälteanlagenzyklus, der zum Aufnehmen eines im Wesentlichen flüssigen Kältemittels und zum Erzeugen eines verdampften Kältemittels konfiguriert ist;
einen Absorber (260), der zum Aufnehmen des verdampften Kältemittels und zum Erzeugen einer ersten Lösung des Kältemittels und eines Lösungsmittels konfiguriert ist, wobei eine zweite Lösung eines Kältemittels und ein Lösungsmittel in dem Absorber enthalten sind;
eine zweite Arbeitsfluidpumpe (264), die zum Empfangen der ersten Lösung und zum Erhöhen des Drucks konfiguriert ist;
wobei der Desorber (244) zum Aufnehmen der ersten Lösung mit einem erhöhten Druck und zum Erzeugen eines verdampften Kältemittels und der zweiten Lösung konfiguriert ist; wobei die Konzentration des Kältemittels in der ersten Lösung größer als die Konzentration des Kältemittels in der zweiten Lösung ist;
einen Kältemittelkondensator (268), der zum Aufnehmen des verdampften Kältemittels und zum Erzeugen eines flüssigen Kältemittels konfiguriert ist;
eine Druckreduziervorrichtung (276), die zum Aufnehmen des flüssigen Kältemittels und Reduzieren des Drucks davon konfiguriert ist, so dass dieses von dem Verdampfer aufgenommen werden kann; und
wobei der Verdampfer (254) des Absorptionskälteanlagenzyklus das verdampfte Kältemittel zurück zum Absorber leiten kann.

8. System nach Anspruch 7, wobei eine Leitung oder ein Behälter die Wärme des restlichen CO₂ nach der Expansion auffängt und die Wärme zum Desorber (244) leiten kann.

## Revendications

1. Système générateur d'énergie (100) comprenant :
une première boucle de circulation de fluide de travail du cycle de Rankine (102) comprenant un dispositif de chauffage (118), un expanseur (122), un récupérateur (114), un premier condenseur de fluide de travail (136), un désorbeur (128), une première pompe de fluide de travail (110) et un premier fluide de travail comprenant du CO₂ ; intégré avec :
un cycle frigorifique d'absorption comprenant une seconde boucle de circulation de fluide de travail (104), qui comprend elle-même un évaporateur (136), un absorbeur (142), une seconde pompe de fluide de travail (146), un désorbeur (128), un second condenseur de fluide de travail (150) et un second fluide de travail comprenant un réfrigérant ;
dans lequel le condenseur (136) du cycle de Rankine fonctionne comme évaporateur (136) du cycle frigorifique d'absorption ; et
**caractérisé en ce que** le cycle de Rankine et le cycle frigorifique d'absorption sont intégrés au désorbeur (128), dans lequel le premier fluide de travail du cycle de Rankine est mis en circulation en relation d'échange thermique avec le second fluide de travail du cycle frigorifique d'absorption.

2. Système selon la revendication 1, dans lequel la première boucle de circulation de fluide de travail du cycle de Rankine (102) comprend en outre un refroidisseur (132).

3. Système selon la revendication 1 ou la revendication 2, dans lequel le cycle frigorifique d'absorption comprend en outre au moins un échangeur de chaleur.

4. Système selon l'une quelconque des revendications précédentes, dans lequel le cycle frigorifique d'absorption comprend en outre une boucle de fluide supplémentaire pour transporter une solution du réfrigérant dans un solvant entre le désorbeur (128) et l'absorbeur (142).

5. Système générateur d'énergie selon la revendication 1, dans lequel :
la première boucle (102) comprend un cycle de Rankine de récupération de chaleur perdue de dioxyde de carbone récupérée par expansion unique, comprenant :
un récupérateur (114) configuré pour recevoir un courant de CO₂ liquide et produire un système de CO₂ liquide à chaleur renforcée ;
une chaudière de récupération de chaleur perdue (118) configurée pour recevoir le courant de CO₂ liquide à chaleur renforcée et produire un courant de CO₂ vaporisé ;
un premier expanseur (122) configuré pour recevoir le courant de CO₂ vaporisé et produire un courant de CO₂ expansé ;
dans lequel le récupérateur (114) est également configuré pour recevoir le courant de CO₂ expansé et produire un courant de CO₂ plus froid ;
un désorbeur (128) configuré pour recevoir le courant de CO₂ plus froid et réduire encore sa température ;
un refroidisseur (132) configuré pour recevoir le courant de CO₂ refroidi et produire un courant de CO₂ encore plus froid ayant une température dans la plage d'environ 35 degrés Celsius à environ 55 degrés Celsius ; et
un condenseur de CO₂ (136) configuré pour recevoir le courant de CO₂ refroidi et produire un courant de CO₂ liquide qui est capable d'être repompé dans le récupérateur (114) en utilisant une pompe à CO₂ (110), dans lequel le condenseur (136) est intégré à un évaporateur d'un cycle frigorifique d'absorption ; et
dans lequel la seconde boucle (104) comprend :
l'évaporateur (136) du cycle frigorifique d'absorption configuré pour recevoir un réfrigérant sensiblement liquide et produire un réfrigérant vaporisé ;
un absorbeur (142) configuré pour recevoir le réfrigérant vaporisé et produire une première solution de réfrigérant et d'un solvant, dans lequel une seconde solution du réfrigérant et du solvant est contenue dans l'absorbeur ;
une pompe à réfrigérant (146) configurée pour recevoir la première solution et augmenter sa pression ;
dans lequel le désorbeur (128) est également configuré pour recevoir la première solution, qui a une pression plus élevée, et produire un réfrigérant vaporisé et la seconde solution ; dans lequel la concentration du réfrigérant dans la première solution est supérieure à la concentration du réfrigérant dans la seconde solution ;
un condenseur de réfrigérant (150) configuré pour recevoir le réfrigérant vaporisé et produire un réfrigérant liquide ; et
un dispositif réducteur de pression (158) configuré pour recevoir le réfrigérant liquide et abaisser sa pression de sorte qu'il puisse être reçu par l'évaporateur (136) ; et
dans lequel l'évaporateur (136) du cycle frigorifique d'absorption est capable de rediriger le réfrigérant vaporisé vers l'absorbeur (142).

6. Système selon la revendication 5, dans lequel le cycle frigorifique d'absorption comprend en outre un échangeur de chaleur configuré pour recevoir le réfrigérant vaporisé de l'évaporateur et fournir un réfrigérant vaporisé à chaleur renforcée à l'absorbeur (142).

7. Système générateur d'énergie selon la revendication 1, dans lequel :
la première boucle (202) comprend un cycle de Rankine de récupération de chaleur perdue de dioxyde de carbone récupérée par double expansion comprenant :
une chaudière de récupération de chaleur perdue (214) configurée pour recevoir une première partie d'un courant de CO₂ liquide et produire une première partie chauffée du courant de CO₂ ;
un premier expanseur (220) configuré pour recevoir la première partie chauffée du courant de CO₂ et produire une première partie expansée du courant de CO₂ ;
un récupérateur (228) configuré pour recevoir la première partie expansée du courant de CO₂ et produire une première partie plus froide du courant de CO₂ ; dans lequel le récupérateur est également configuré pour recevoir une seconde partie du courant de CO₂ liquide et produire une seconde partie à chaleur renforcée du courant de CO₂ ;
un second expanseur (238) configuré pour recevoir la seconde partie à chaleur renforcée du courant de CO₂ et produire une seconde partie expansée du courant de CO₂ ;
un désorbeur (244) configuré pour recevoir la seconde partie expansée du courant de CO₂ et produire une seconde partie plus froide du courant de CO₂ ;
un refroidisseur (248) configuré pour recevoir la première partie refroidie du courant de CO₂ et la seconde partie refroidie du courant de CO₂ et produire un courant de CO₂ encore plus froid ayant une température dans la plage d'environ 35 degrés Celsius à environ 55 degrés Celsius ;
un premier condenseur de fluide de travail (254) configuré pour recevoir le courant de CO₂ refroidi, intégré à un évaporateur d'un cycle frigorifique d'absorption ; et capable de produire un courant de CO₂ liquide ; qui peut être repompé comme première partie et seconde partie du courant de CO₂ liquide en utilisant une pompe à CO₂ ; et
dans lequel la seconde boucle comprend :
l'évaporateur (254) du cycle frigorifique d'absorption configuré pour recevoir un réfrigérant sensiblement liquide et produire un réfrigérant vaporisé ;
un absorbeur (260) configuré pour recevoir le réfrigérant vaporisé et produire une première solution du réfrigérant et d'un solvant ; dans lequel une seconde solution d'un réfrigérant et d'un solvant est contenue dans l'absorbeur ;
une seconde pompe à fluide de travail (264) configurée pour recevoir la première solution et augmenter sa pression ;
dans lequel le désorbeur (244) est également configuré pour recevoir la première solution avec une pression plus élevée et produire un réfrigérant vaporisé et la seconde solution ;
dans lequel la concentration du réfrigérant dans la première solution est supérieure à la concentration du réfrigérant dans la seconde solution ;
un condenseur de réfrigérant (268) configuré pour recevoir le réfrigérant vaporisé et produire un réfrigérant liquide ;
un dispositif réducteur de pression (276) configuré pour recevoir le réfrigérant liquide et abaisser sa pression de sorte qu'il puisse être reçu par l'évaporateur ; et
dans lequel l'évaporateur (254) du cycle frigorifique d'absorption est capable de rediriger le réfrigérant vaporisé vers l'absorbeur.

8. Système selon la revendication 7, dans lequel un conduit ou un récipient capture la chaleur du CO₂ qui reste après expansion et est capable de diriger la chaleur vers l'absorbeur (244).
